# EUROPEAN PATENT APPLICATION

(11) **EP 4 792 928 A1**
(43) Date of publication of application: **19.08.2026**
(21) Application number: 26157735.7
(22) Date of filing: 11.02.2026
(51) Int. Cl.: B01J 19/00, G01N 21/27, G01N 21/75, G01N 21/31, G01N 21/65

(54) **ANALYTICAL APPARATUS, ANALYTICAL METHOD AND PROGRAM**

(30) Priority: 14.02.2025 JP 2025022102
(71) Applicant: Yokogawa Electric Corporation, Tokyo 180-8750 (JP)
(72) Inventor: HATTORI, Yusuke, Musashino-shi, Tokyo, 180-8750 (JP)
(74) Representative: Hoffmann Eitle

(57) **Abstract**

[Solution] Provided is an analytical apparatus with a processor, which estimates an end point of a chemical reaction, in which a concentration of at least one raw material is unknown, the processor performs operations including: a spectrum acquisition unit that acquires spectroscopic spectra at a plurality of time points for a chemical reaction system; a calculation unit that calculates a spectroscopic spectrum feature quantity for each time point from the spectroscopic spectra at the plurality of time points; and an estimation unit that estimates an end point of a chemical reaction based on variation of the feature quantity that is calculated by the calculation unit.
Further provided is an analytical method using the analytical apparatus, and a program that causes a computer to function the analytical apparatus.

## Description

### BACKGROUND

### 1. TECHNICAL FIELD

The present invention relates to an analytical apparatus, an analytical method and a program.

### 2. RELATED ART

In Patent Document 1, "a method for performing operation control of a plant based on a measurement value obtained by performing near-infrared analysis on a sample, the operation control method of the plant is performed by near-infrared analysis, characterized in including performing near-infrared analysis on the sample based on a calibration curve previously created, comparing the measurement value of the near-infrared analysis method with a tolerance value, performing analysis with a general analytical method when the measurement value is greater than the tolerance value is obtained, comparing the measurement value with the tolerance value by the general analytical method, inputting data of previous near-infrared analysis to pursue an expected value when the measurement value of the general analytical method is equal to or less than the tolerance value, performing inspection of the near-infrared analysis device when the expected value is greater than the tolerance value, performing correction and evaluation of the calibration curve when the expected value is equal to or less than the tolerance value" is described (claim 1). In Patent Document 2, it is described that "when the titer of the atomic cluster is f, the response from the analyzer is r, the number of unstable intermediates is L, its quantitative function is F(r), the number of known components is M, the number of reaction liquid samples analyzed is n, the concentration of known components is c, the sum of the sample's loading component concentration multiplied by the titer is C, and the number of analyses is m, determine the parameters of the unknown quantitative function F(r) through numerical calculation to minimize the value represented by the number 1, and use this quantitative function for quantification" (abstract). In Patent Document 3, "A method for continuously obtaining Raman spectrum samples of a solution containing chemical components within a reaction vessel by radiation emitted from said solution due to substantially monochromatic radiation, detecting scattered radiation, and processing said Raman spectrum samples by means of multivariate data analysis (MVDA) to identify a first principal component associated with a latent variability indicator of the continuously occurring reaction progress, wherein said multivariate data analysis is independent of calibration using reference measurement values of a target body having a known composition, and wherein said method for monitoring a pharmaceutical-related chemical reaction is characterized by measuring the progress of the chemical reaction based on said at least one first principal component and, optionally, based on one or more additional principal components produced from one or more prior reactions of the same type" is described (claim 1). In Patent Document 4, "an optical analysis system, including an irradiation unit that irradiates the irradiation light onto each of the first raw material and the second raw material before the start of synthesis, and also irradiates the irradiation light onto a mixture containing the first raw material, the second raw material, and the product after the start of synthesis in a chemical reaction system for synthesizing a product by combining a first raw material and a second raw material; a detection unit that detects measurement light based on the irradiation light emitted by said irradiation unit, wherein said measurement light contains information regarding the spectroscopic spectra of said first raw material, said second raw material, and said mixture, respectively; an computation unit that calculates the spectroscopic spectrum of each of the first raw material, the second raw material, and the mixture, and calculates the spectroscopic spectrum of the product based on each spectroscopic spectrum; wherein the product includes either a non-isomerized compound or one of a pair of compounds that are optical isomers of each other" is described (claim 1). In Patent Document 5, "A method for spectrally analyzing a plurality of measurement spectra obtained by measuring a sample, based on the premise that said measurement spectra can be expressed by a first combination of pure spectra corresponding to a predetermined number of components, each multiplied by its respective concentration value. This method employs multivariate curve resolution (MCR) to separate said pure spectra corresponding to said number of components from said plurality of measurement spectra and to calculate said concentration values for each pure spectrum, the spectrally analyzing method is characterized in setting an equilibrium model corresponding to the equilibrium state of the sample where three or more chemical species coexist, establishing at least one chemical equilibrium equation based on said equilibrium model, initiating MCR for multiple measured spectra, and (A) fitting a concentration curve based on said chemical equilibrium equation to the calculated concentration values to obtain optimal values for the thermodynamic parameters constituting said chemical equilibrium equation, (B) obtaining new concentration values from the chemical equilibrium equation using the obtained optimal thermodynamic parameters, separating the pure spectra using these new concentration values, and calculating the concentration values, repeating steps (A) and (B) to obtain the thermodynamic parameters corresponding to the equilibrium model, the pure spectra, and the concentration values for each pure spectrum" is described (claim 1). In Patent Document 6, "When adding alkylene oxide to compounds containing active hydrogen atoms and/or fatty acid alkyl esters for reaction, either a reactor equipped with a stirrer is provided, along with a line for withdrawing a portion of the reaction liquid from this reactor and returning it to the reactor via near-infrared absorption spectral analysis means, or by directly placing the detection end of the near-infrared absorption spectrum spectroscopic analysis means inside the reactor. This allows the calculation of at least one physical property of the reaction product - such as hydroxyl value, or cloud point. The system further includes means for controlling the supply of alkylene oxide to the reactor based on the calculated value" is described (claim 1).

### Related Art Documents

### Patent Document

Patent Document 1: Japanese Patent Application Publication No. 2000-298512
Patent Document 2: Japanese Patent Application Publication No. 2001-318088
Patent Document 3: Japanese Translation of PCT International Patent Application No. 2002-534674
Patent Document 4: Japanese Patent Application Publication No. 2019-211400
Patent Document 5: Japanese Patent Application Publication No. 2024-113582
Patent Document 6: Japanese Patent Application Publication No. 2000-1451

### SUMMARY

A first aspect of the present invention provides an analytical apparatus that estimates an end point of a chemical reaction where a concentration of at least one raw material is unknown. The analytical apparatus includes a spectrum acquisition unit, a calculation unit and an estimation unit. The spectrum acquisition unit may acquire spectroscopic spectra at a plurality of time points of the chemical reaction system. The calculation unit may calculate a spectroscopic spectrum feature quantity for each time point from the spectroscopic spectra at a plurality of time points. The estimation unit may estimate an end point of a chemical reaction based on variation of the feature quantity that is calculated by the calculation unit.

In the above descriptions, the analytical apparatus further includes an identification unit. The identification unit may identify, based on an end point of a chemical reaction estimated by the estimation unit, a quantity of a concentration-unknown raw material that is a raw material of unknown concentration used in the chemical reaction system.

In the above descriptions, the concentration-unknown raw material may be a product of a chemical reaction in a previous stage of the chemical reaction to be estimated.

In the above descriptions, the calculation unit may calculate a principal component of spectroscopic spectra at each time point included in the plurality of time points as the feature quantity by performing principal component analysis on spectroscopic spectra at the plurality of time points.

In the above descriptions, the calculation unit may calculate a value, as the feature quantity, based on peak area and/or peak intensity of an identified wavelength included in the spectroscopic spectra at each time point included in the plurality of time points.

In the above descriptions, the estimation unit may estimate the end point of the chemical reaction based on a first derivative value of the feature quantity with respect to time lapse.

In the above descriptions, the estimation unit may estimate, as an end point of a chemical reaction, a time point when an absolute value of a first derivative value of the feature quantity with respect to time lapse has become equal to or greater than a threshold.

In the above descriptions, the analytical apparatus further includes a preprocessing unit that preprocesses spectroscopic spectra. The calculation unit may calculate the feature quantity from spectroscopic spectra preprocessed by the preprocessing unit.

In the above descriptions, the preprocessing unit may apply, as the preprocess, any one or more of baseline correction, first derivation and second derivation in relation to the spectroscopic spectra.

In the above descriptions, the chemical reaction may be a part of a continuous reaction that uses a product as a new raw material to repeatedly cause a subsequent reaction.

In the above descriptions, the chemical reaction may be a reaction that produces a block copolymer by polymerizing a second monomer onto a polymer composed of repeating units of a first monomer, the second monomer being different from the first monomer.

A second aspect of the present invention provides an analytical method for estimating an end point of a chemical reaction, in which a concentration of at least one raw material is unknown. The analytical method includes acquiring spectroscopic spectra, calculating and estimating. In acquiring spectroscopic spectra, spectroscopic spectra may be acquired at a plurality of time points for a chemical reaction system. In calculating, a spectroscopic spectrum feature quantity for each time point from the spectroscopic spectra at the plurality of time points may be calculated. In estimating, an end point of a chemical reaction based on variation of the feature quantity that is calculated at the calculating may be estimated.

A third aspect of the present invention provides a program for estimating an end point of a chemical reaction where a concentration of at least one raw material is unknown. The program is carried out by a computer, causing the computer to perform acquiring spectroscopic spectra, calculating and estimating. In acquiring spectroscopic spectra, spectroscopic spectra may be acquired at a plurality of time points for a chemical reaction system. In calculating, a spectroscopic spectrum feature quantity for each time point from the spectroscopic spectra at the plurality of time points may be calculated. In estimating, an end point of a chemical reaction based on variation of the feature quantity that is calculated at the calculating may be estimated.

Note that the summary clause does not necessarily describe all necessary features of the embodiments of the present invention. The present invention may also be a sub-combination of the features described above.

### BRIEF DESCRIPTION OF THE DRAWINGS

Fig. 1 illustrates an example of a continuous reaction according to the present embodiment.
Fig. 2 illustrates an example of a configuration of an analytical apparatus 50 according to the present embodiment.
Fig. 3 illustrates an example of a flow of an analytical method according to the present embodiment.
Fig. 4 illustrates an example of a subflow of S300 of the flow according to Fig. 3.
Fig. 5 illustrates an example of a chemical reaction that is a target of the present embodiment.
Fig. 6 illustrates an example of a graph of a feature quantity according to the present embodiment.
Fig. 7 illustrates another example of a graph of the feature quantity according to the present embodiment.
Fig. 8 illustrates an example of a computer 2200 in which a plurality of aspects of the present invention may be embodied wholly or in part.

### DESCRIPTION OF EXEMPLARY EMBODIMENTS

Hereinafter, the present invention will be described through embodiments of the invention, but the following embodiments do not limit the invention according to the claims. Further, not all combinations of features described in the embodiments are essential to the solving means of the invention.

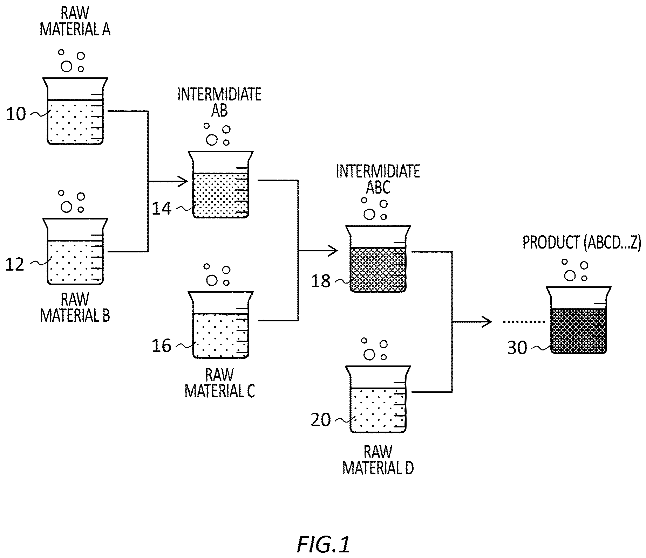

Fig. 1 illustrates an example of a continuous reaction according to the present embodiment. Fig. 1 is an example of a reaction to produce a product 30 with a structure derived from a plurality of raw material A, raw material B, raw material C, ..., raw material Z. First, in a first stage of the reaction, an intermediate AB 14 is obtained by adding a raw material B 12 to a raw material A 10 to cause a reaction. Then, in a second stage of the reaction, an intermediate ABC 18 is obtained by causing a raw material C 16 to react with the intermediate AB 14. In reactions from a third stage onward, similarly, by successively reacting a raw material D 20 or the like with the intermediates to continue the reaction, finally the product 30 (ABCD...Z) is obtained with a structure derived from the raw material A, the raw material B, the raw material C, the raw material D, ..., and the raw material Z. Such reactions may also be implemented in a large-scale plant.

Herein, although the concentration or dosage of the raw material of the reaction (for example, the raw material A 10, the raw material B 12, the raw material C 16, the raw material D 20 or the like) is known, the concentration of the intermediate (for example, the intermediate AB 14, the intermediate ABC 18 or the like) is not always clear, as it depends on the extent of progression of the forward reactions or side reactions at each stage and/or the purification yield or the like. A calibration curve is required to accurately measure the concentration of the intermediate. To obtain the calibration curve, it is required to acquire a sample of the pre-purified intermediate, use it to produce a standard sample at a plurality of concentrations, and then perform analysis using HPLC or the like.

However, this method not only requires time and cost for purifying the intermediate or creating the calibration curve, but also makes it difficult to know the reaction progression degree (for example, such as the extent of raw material consumption or the end point of the chemical reaction or the like) by measuring a quantity of the intermediate in real time during the reaction. On the other hand, with the analytical apparatus 50 according to the present embodiment described below, the reaction progression degree, the quantity of the intermediate produced or the like can be known in real time.

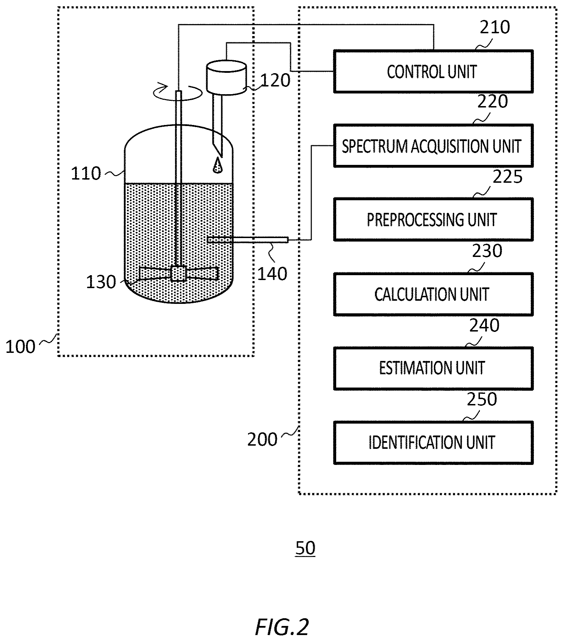

Fig. 2 illustrates an example of a configuration of an analytical apparatus 50 according to the present embodiment. In the present embodiment, the analytical apparatus 50 analyses a chemical reaction progression degree in real time. For example, the analytical apparatus 50 estimates an end point of a chemical reaction in which a concentration of at least one raw material is unknown. For example, the chemical reaction may be a part of a continuous reaction that uses a product as a new raw material to repeatedly cause subsequent reactions.
The analytical apparatus 50 includes a reaction unit 100 and a computation unit 200.

The reaction unit 100 houses a raw material, products or the like, and a chemical reaction to be analyzed is carried out therein. The reaction unit 100 may have a configuration of a known reactor. For example, the reaction unit 100 may have a reaction tank 110, a raw material supplying unit 120, a stirrer 130 and a spectral sensor 140.

The reaction tank 110 provides a space where a chemical reaction is carried out. The reaction tank 110 may be a known reaction vessel. The reaction tank 110 may have a volume and shape corresponding to the scale of the reaction to be carried out. For example, the reaction tank 110 may be substantially cylindrical.

The raw material supplying unit 120 supplies materials required for the reaction to the reaction tank 110. For example, the raw material supplying unit 120 supplies raw materials, catalyst, solvent or their mixture or the like of the reaction to the reaction tank 110. The raw material supplying unit 120 may be achieved by a known configuration such as a tank, a pump, and the like. The raw material supplying unit 120 is controlled by the computation unit 200. The raw material supplying unit 120 may include a quantitative supply pump.

The stirrer 130 stirs a fluid (also referred to as a "chemical reaction system") containing reactants, products and the like present in the reaction tank 110. The stirrer 130 may include a rotating stirring blade. The stirring blade may be selected in terms of material and shape according to the viscosity, reactivity, and the like of the chemical reaction system.

The spectral sensor 140 acquires spectroscopic spectra of the chemical reaction system. In particular, the spectral sensor 140 may be an inline spectroscopic measurement device capable of real-time measurement. The spectral sensor 140 may acquire a known spectrum, for example, an ultraviolet-visible absorption spectrum, a near-infrared absorption spectrum, an infrared absorption spectrum, or a Raman spectrum. The spectral sensor 140 supplies a measurement result to the computation unit 200. A light source corresponding to the target wavelength of the spectral sensor 140 may be separately provided in the reaction unit 100.

The reaction unit 100 may additionally or alternatively have another element required for controlling the reaction. For example, the reaction unit 100 may have an exposure device, a cooling device, a heating device, a reflux device, a baffle plate, and/or the like as needed.

When handling a continuous reaction, a plurality of reaction units 100 may be provided. In this case, the product or the purified product housed within the reaction unit 100 that carried out a first reaction may be supplied via piping or the like to another reaction unit 100 that carries out a second reaction subsequent to the first reaction.

The analytical apparatus 50 may not include a reaction unit 100. In this case, the analytical apparatus 50 may communicate with an external reactor that corresponds to the reaction unit 100, control the reaction of the external reactor, and acquire data from the external reactor.

The computation unit 200 acquires data measured in the reaction unit 100 and controls the reaction of the reaction unit 100. The computation unit 200 may have a reaction control unit 210, a spectrum acquisition unit 220, a preprocessing unit 225, a calculation unit 230, an estimation unit 240 and an identification unit 250.

The computation unit 200 may be a computer such as a PC (personal computer), tablet computer, smartphone, workstation, server computer, or general purpose computer, and may be executed by a processor in a computer system with a plurality of connected computers.

The processor that achieves the computation unit 200 may alternatively be a dedicated computer designed for chemical reaction analysis, or may be dedicated hardware achieved by dedicated circuitry. The computation unit 200 may be implemented by a single processor within a single device (computer), or may be achieved by a plurality of processors within a plurality of devices that share the workload. The computation unit 200 includes a memory/hard disk or the like, though these are not specifically described below. Information required for processing is stored as appropriate, and information is transmitted between respective processing modules such as the calculation unit 230 and the estimation unit 240.

The reaction control unit 210 controls operations of the raw material supplying unit 120 to cause the raw material supplying unit 120 to supply raw materials for the chemical reaction to the reaction tank 110. For example, the reaction control unit 210 supplies raw materials in a desired quantity to the reaction tank 110 by controlling operations of the pump of the raw material supplying unit 120. The reaction control unit 210 may also control the supply of other materials required directly or indirectly for the chemical reaction (for example, catalyst and/or solvent) instead of the raw materials of the chemical reaction.

When handling the continuous reaction, the reaction control unit 210 may control the transfer of products or their purified products between the plurality of reaction units 100. For example, the reaction control unit 210 may supply the products or the purified products housed in the reaction unit 100, where a first reaction is performed, to a separate reaction unit 100 that performs a second reaction subsequent to the first reaction via piping or the like by using a pump or the like.

The spectrum acquisition unit 220 acquires spectroscopic spectra at a plurality of time points of the chemical reaction system. The spectrum acquisition unit 220 may acquire the spectroscopic spectra from the spectral sensor 140 continuously.

The preprocessing unit 225 preprocesses the spectroscopic spectra acquired by the spectrum acquisition unit 220. The preprocessing unit 225 may apply any one or more of baseline correction, first derivation or second derivation to the spectroscopic spectra as the preprocessing.

The calculation unit 230 calculates a spectroscopic spectrum feature quantity for each time point from the spectroscopic spectra at the plurality of time points. For example, the calculation unit 230 may calculate the principal components of the spectroscopic spectrum as the feature quantity at each time point included in the plurality of time points by performing principal component analysis on the spectroscopic spectra at the plurality of time points. The calculation unit 230 may calculate the feature quantity from the spectroscopic spectrum preprocessed by the preprocessing unit 225 or the spectroscopic spectrum acquired by the spectrum acquisition unit 220.

The estimation unit 240 estimates an end point of the chemical reaction based on variation of the feature quantities calculated by the calculation unit 230. The estimation unit 240 may estimate the end point of the chemical reaction based on an nth-order derivative value (where n is a natural number) of the feature quantity in relation to time lapse.

The identification unit 250 identifies a quantity of a concentration-unknown raw material that is a raw material of unknown concentration used in the chemical reaction system, based on the end point of the chemical reaction estimated by the estimation unit 240. For example, the identification unit 250 may identify the quantity of the concentration-unknown raw material, based on the total quantity of the concentration-known raw material that is the raw material with a known concentration used until the end point of the chemical reaction, and stoichiometry. For example, the identification unit 250 may identify an initial concentration of the intermediate or the quantity of the intermediate used, in the continuous reaction.

In this manner, the analytical apparatus 50 of the present embodiment can analyze the extent of proceeding of the chemical reaction or the end point of the chemical reaction in real time by using the spectroscopic spectra. Further, according to the present embodiment, compared to the method using a calibration curve or the like, the time and cost of the analysis can be reduced.

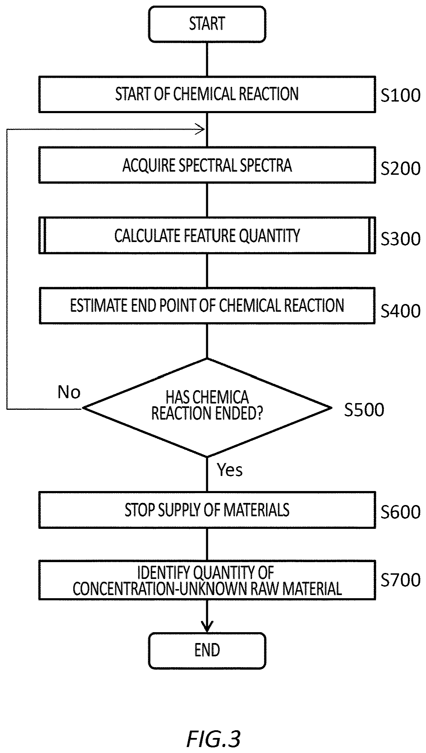

Fig. 3 illustrates an example of a flow of an analytical method according to the present embodiment. For example, the analytical apparatus 50 analyses the chemical reaction by performing the process of S100 to S700. The processing order for S100 to S700 may be changed, or some processing steps may be omitted.

First, in S100, the chemical reaction to be analyzed starts. The reaction may start by supplying materials required for the chemical reaction (for example, the raw material, catalyst, and/or solvent or the like) to the reaction tank 110. The supply of materials may be performed by the reaction control unit 210, controlling the raw material supplying unit 120. Alternatively, the supply of materials may be performed by means other than the raw material supplying unit 120. Some materials may be supplied to the reaction tank 110 in advance.

In the case of the continuous reaction, the reaction tank 110 may use the product from the preceding reaction as at least some of the raw materials for the subsequent reaction (that is, as an intermediate). Alternatively, the intermediate may be supplied to the reaction tank 110 from a separate reaction tank where the preceding reaction is carried out, via piping or the like.

For example, in the continuous reaction illustrated in Fig. 1, when the raw material A has been supplied to the reaction tank 110 in advance, after the reaction starts at S100, the reaction control unit 210 may supply the raw material B from the raw material supplying unit 120 to the reaction tank 110. After the reaction starts at S100, the reaction control unit 210 may supply all the raw materials (for example, the raw material A and the raw material B) from the raw material supplying unit 120 to the reaction tank 110. In the reaction at a second stage, the reaction control unit 210 may supply the raw material C from the raw material supplying unit 120 to the reaction tank 110 that stores the intermediate AB in advance, which is the product of the reaction of the first stage.

The reaction control unit 210 may control the raw material supplying unit 120 to control the supply quantity of the raw material. For example, the reaction control unit 210 may control the raw material supplying unit 120 such that the raw materials (for example, the raw material B in the reaction of the first stage or the raw material C in the reaction of the second stage in Fig. 1) are supplied in a certain volume (for example, 1 ml, 10 ml, 100 ml or the like) or a certain weight (for example, 1 g, 10 g, 100 g or the like) per unit time (for example, per second or per minute). For example, the reaction control unit 210 may control the supply quantity by providing, to the raw material supplying unit 120, which is the quantitative supply pump, an instruction for the supply quantity per hour and/or supply time.

The reaction unit 100 may start and/or promote the chemical reaction by applying heat or light to the chemical reaction system as needed. The reaction unit 100 may promote the chemical reaction by stirring the chemical reaction system with the stirrer 130 during the reaction. For example, the reaction control unit 210 may control the stirrer 130, heating device and/or exposure device or the like of the reaction unit 100 to control the start and/or promotion of the chemical reaction.

Then at S200, the analytical apparatus 50 acquires the spectroscopic spectra at the plurality of time points of the chemical reaction system. The spectrum acquisition unit 220 acquires data of the chemical reaction system spectroscopic spectra from the spectral sensor 140 after the reaction starts. The spectrum acquisition unit 220 may acquire the spectroscopic spectra at the plurality of time points. The spectrum acquisition unit 220 may acquire the spectroscopic spectra during the reaction in real time one after another. The spectrum acquisition unit 220 supplies the spectroscopic spectra to the computation unit 200.

Then at S300, the analytical apparatus 50 calculates feature quantities from the spectroscopic spectra acquired at S200.

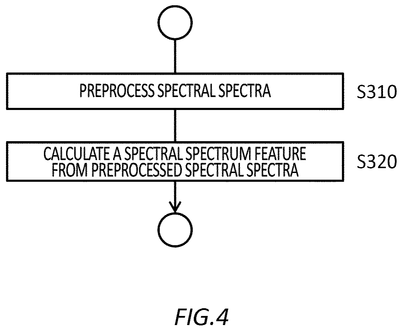

Fig. 4 illustrates an example of a subflow of S300 of the flow according to Fig. 3. The preprocessing unit 225 and the calculation unit 230 may perform the processing steps of S300 by performing the processing steps from S310 to S320. Another processing step may be performed in addition to S310 to S320. Some of the processing steps of S310 to S320 may be omitted.

At S310, the preprocessing unit 225 preprocesses the spectroscopic spectra acquired by the spectrum acquisition unit 220 at S200. The preprocessing unit 225 may use a preprocessing manner that is known in relation to the spectroscopic spectra. For example, the preprocessing unit 225 may perform standardization, normalization, removal of predefined solvent components, baseline correction, first differentiation, second differentiation, or a combination thereof on each of the spectroscopic spectra at the plurality of time points. As an example, the preprocessing unit 225 may perform the baseline correction on the spectroscopic spectrum for each time point.

Then at S320, the calculation unit 230 calculates a spectroscopic spectrum feature quantity for each time point by quantifying the features of the preprocessed spectroscopic spectra at S310. In this manner, the calculation unit 230 outputs the feature quantity at each time point when the spectroscopic spectrum is acquired.

For example, the calculation unit 230 may calculate, as the feature quantity, a score obtained as a principal component of the spectroscopic spectrum at each time point included in the plurality of time points, by performing the principal component analysis (PCA) on the spectroscopic spectra at the plurality of time points. As an example, the calculation unit 230 may calculate, as the feature quantity, a first principal component in the principal component analysis.

The calculation unit 230 may perform the principal component analysis by using all the spectroscopic spectra at the plurality of time points obtained from the start of the reaction to the present time. Alternatively, the calculation unit 230 may perform the principal component analysis by using the spectroscopic spectra of the plurality of time points from the present time to a predetermined time in the past (for example, 360 spectroscopic spectra at 10-second intervals from 60 minutes ago to the present time).

The calculation unit 230 may identify the wavelength range where variation occurs in the spectroscopic spectra due to the chemical reaction and set this identified wavelength range as the wavelength range subject to the principal component analysis. During the principal component analysis, the calculation unit 230 may receive an input regarding the target wavelength range from the user. The calculation unit 230 may apply independent component analysis (ICA) and/or multivariate spectral decomposition (MCR) to the spectroscopic spectra to calculate the feature quantities, in addition to or instead of the principal component analysis.

The calculation unit 230 may calculate the spectroscopic spectrum feature quantity for each time point based on the peak shape of the spectroscopic spectra instead of the principal component analysis or the like. For example, the calculation unit 230 may calculate, as the feature quantity, the value based on the peak area and/or the peak intensity of the identified wavelength included in the spectroscopic spectra at each time point included in the plurality of time points.

At S400 subsequent to S300, the estimation unit 240 estimates the end point of the chemical reaction based on the variation of the feature quantity calculated at S300. When the variation of the feature quantity satisfies a predetermined condition, the estimation unit 240 may detect the end point of the chemical reaction and determine that the chemical reaction has ended. When the variation of the feature quantity does not satisfy the predetermined condition, the estimation unit 240 may determine that the chemical reaction is going on.

The estimation unit 240 may estimate the end point of the chemical reaction based on the numeric value itself of the feature quantity or the nth derivative value (where n is a natural number) of the feature quantity in relation to time lapse. For example, the estimation unit 240 may calculate a first derivative value or a second derivative value of the feature quantity in relation to time lapse.

The estimation unit 240 may estimate the end point of the chemical reaction by comparing the feature quantity or the numeric value based on the feature quantity with a threshold. For example, the estimation unit 240 may estimate the end point of the chemical reaction based on a determination of whether or not the feature quantity or the numeric value based on the feature quantity is equal to or greater than the threshold, or equal to or less than the threshold. For example, the estimation unit 240 may estimate the end point of the chemical reaction based on a determination of whether or not the feature quantity or the numeric value based on the feature quantity is within a predetermined numeric value range.

As an example, the estimation unit 240 may estimate a time point, when an absolute value of a derivative value (for example, a first derivative value) of the feature quantity in relation to time lapse becomes equal to or greater than the threshold, as the end point of the chemical reaction. As an example, the estimation unit 240 may estimate a time point when the absolute value of the feature quantity becomes equal to or less than the threshold as the end point of the chemical reaction. Specific examples of processing by the estimation unit 240 are described below.

Then at S500, the estimation unit 240 determines whether or not the chemical reaction has ended at present. When the estimation unit 240 determines that the chemical reaction has ended at S400, the analytical apparatus 50 proceeds the processing to S600. Otherwise, the analytical apparatus 50 continues the chemical reaction and continues acquiring the spectroscopic spectra of S200.

When the chemical reaction is continued, the analytical apparatus 50 may resume the processing of S200 after waiting for a predetermined period of time (for example, 1 to 300 seconds). For example, the processing of S200 may be resumed such that acquisition of the spectroscopic spectra of S200 occurs at a certain interval (for example, an interval of 1 to 300 seconds). This is because reacquiring the spectroscopic spectra after a very short interval is unlikely to yield any variation, potentially wasting memory resources and/or computational resources.

When it is determined that the chemical reaction has ended at present, the estimation unit 240 may sample the chemical reaction system as needed, perform analysis such as HPLC, and confirm whether or not a concentration-unknown raw material (for example, the intermediate AB) has disappeared. If the concentration-unknown raw material (for example, the intermediate AB) has not disappeared, the processing of S200 may further be continued.

The processing steps of S200 to S500 may also be performed concurrently rather than sequentially.

At S600, the reaction control unit 210 controls operations of the raw material supplying unit 120 to stop supplying the raw materials for the chemical reaction. For example, in Fig. **1****,** the supply of the raw material B in the reaction at the first stage may be stopped, and the supply of the raw material C in the reaction at the second stage may be stopped. The reaction control unit 210 may also perform control on temperature (for example, cooling or heating) and/or addition of a reaction inhibitor or the like, in addition to or instead of stopping the supply of the raw materials. This enables the conservation of use of raw materials and other resources that do not contribute to the chemical reaction.

Then, in S700, the identification unit 250 identifies a quantity of a concentration-unknown raw material, which is a raw material of unknown concentration used in the chemical reaction system, based on the end point of the chemical reaction estimated in S400. The identification unit 250 identifies a quantity and a concentration of the concentration-unknown raw material and a quantity of the product based on a total quantity of the concentration-known raw material added from the start of the reaction to the end point of the reaction and chemical reaction stoichiometry. The concentration-unknown raw material may be the product of the chemical reaction in a previous stage of the chemical reaction to be estimated (for example, an intermediate AB that is the product of the first stage reaction, and one raw material of the second stage shown in Fig. 1).

In the chemical reaction stoichiometry, for the consumption molar quantity x of the concentration-known raw material, make the consumption molar quantity of the concentration-unknown raw material be y (y = mx), and make the production molar quantity of the product be z (z = nx). Herein, m and n are the molar quantity ratios of the chemical reaction based on stoichiometry. The concentration of the concentration-known raw material is M_{X}, and the total quantity thereof is regarded as X. The concentration of the concentration-unknown raw material is M_{Y}, and the total quantity (initial quantity) thereof is regarded as Y. The production quantity of the product is regarded as Z.

In this case, the identification unit 250 can identify an initial (consumption) molar quantity y of the concentration-unknown raw material by calculating y=(M_{X}×X)×(mx/x), and identify the concentration M_{Y} of the concentration-unknown raw material by calculating M_{Y}=(Mx×X)×(mx/x)×(1/Y), for example. The identification unit 250 can identify a molar quantity z of the product (an intermediate of the next chemical reaction) by calculating z=(Mx×X)×(nx/x), for example.

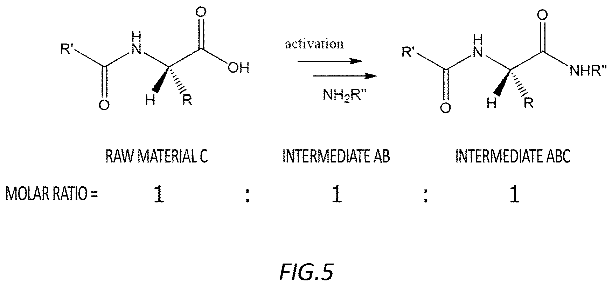

Fig. 5 illustrates an example of a target chemical reaction of the present embodiment. The analytical apparatus 50 according to the present embodiment may be used in a peptide synthesis reaction as shown in Fig. 5, for example. R, R' and R" of the compound in the figure may be any organic group. For example, R may be any functional group (side chain), R' may be a protecting group, and R" may be a peptide or amino acid constituting the intermediate. The reaction of the second stage in Fig. 1 may be a reaction in which a raw material C reacts with the intermediate AB as shown in Fig. 5 to produce an intermediate ABC. Herein, the concentration of the raw material C is known.

In the reaction shown in Fig. 5, the molar ratio of the raw material C and the intermediate AB consumed in the reaction, and the produced intermediate ABC, is 1:1:1 (that is, x:y:z = 1:1:1). Therefore, the identification unit 250 may calculate a total quantity of the raw material C that is the concentration-known raw material added from the start of the reaction to the end point of the reaction (for example, weight or volume of the raw material C), by calculating an addition quantity per each unit time of the raw material C added to the chemical reaction system × a period from the start of the reaction to the end point of the reaction.

**In** the present embodiment, the analytical method and the analytical apparatus may be applied in various synthesis reactions other than the peptide synthesis reaction. **In** the present embodiment, the analytical method and the analytical apparatus are particularly suitable for use in the chemical reaction where the molar ratio of raw material and product is known. For example, the analytical apparatus and analytical method of the present embodiment may also be used for the synthesis reaction of nucleic acids, polysaccharides, or other compounds containing a repeating constant structural unit, in addition to or instead of peptides. The analytical apparatus and analytical method of the present embodiment may also be applied to a single reaction containing a raw material of unknown concentration, rather than a continuous reaction.

Then, the identification unit 250 calculates a molar quantity M_{C} of the raw material C from the known concentration and total quantity of the raw material C (furthermore, the density of the raw material C as needed). The identification unit 250 can identify a quantity identical to the molar quantity M_{C} as a consumption mole quantity M_{AB} of the intermediate AB that is a concentration-unknown raw material, and a production mole quantity M_{ABC} of the intermediate ABC that is the product.

Furthermore, the identification unit 250 identifies the concentration before the reaction of the intermediate AB that is a concentration-unknown raw material, by using the addition quantity (volume or weight) of the consumption mole quantity M_{AB} and the intermediate AB. The identification unit 250 may identify the concentration (volume or weight or the like) of the intermediate ABC that is the product, by using the quantity (volume concentration or weight concentration or the like) of the product before purification and/or after purification and the production mole quantity M_{ABC}. In this manner, the identification unit 250 can identify the quantity or concentration of the concentration-unknown raw material and the product based on the end point of the chemical reaction and the quantity ratio of the raw material and the product in the chemical reaction.

After S700, the process may end, or carry out a separate reaction using a product as a raw material alternatively. For example, a downstream reaction may be performed in the continuous reaction shown in Fig. 1. Before carrying out the downstream reaction, the separation, purification, transfer of products, and/or removal of byproducts and raw materials may be performed. Also in the downstream reaction, the process of S100 to S700 may be repeated.

In this manner, according to the present embodiment, by analyzing the spectroscopic spectra of the chemical reaction system, the concentration or quantity of the raw material of unknown concentration can be calculated, in real time, at the same time as estimation of an extent of proceeding of the chemical reaction or the end point of the chemical reaction. Also, according to the present embodiment, the proceeding condition of the chemical reaction can be analyzed more rapidly, at lower cost, and in a shorter time compared to the method using calibration curves. In particular, according to the present embodiment, it can be more suitably used for analyzing intermediates in continuous reactions where obtaining information about raw materials is difficult compared to single batch synthesis.

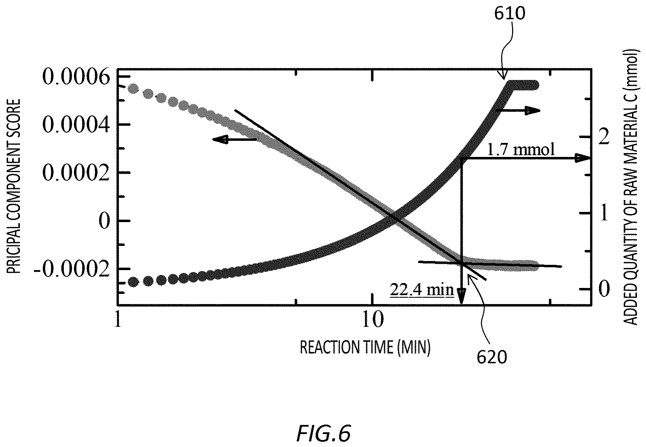

Fig. 6 illustrates an example of a feature quantity graph according to the present embodiment. The horizontal axis in Fig. 6 shows the elapsed time after the start of the chemical reaction producing the intermediate ABC (second stage in Fig. 1), displayed as "reaction time (min)". The vertical axis on the left side of Fig. 6 shows the temporal variation in the first principal component obtained by performing principal component analysis on the spectroscopic spectra at a plurality of time points in time by the calculation unit 230, corresponding to the downward-sloping curve. The vertical axis on the right side of Fig. 6 shows the total quantity of the raw material C added to the chemical reaction system.

As shown in the figure, the numeric value of the first principal component decreases immediately after the reaction and subsequently continues to decrease at an approximately constant rate until time point 620. The fact that the numeric value of the first principal component varies at a constant rate indicates that the composition included within the chemical reaction system also varies at a constant rate. This suggests that prior to the time point 620, the chemical reaction proceeded at approximately a constant rate.

At time point 620 (indicated as 22.4 min in the figure), the slope of the line segment representing the first principal component varies rapidly to positive. This indicates that a reaction proceeding at a constant rate suddenly underwent an abnormal change. That is, the rapid variation in slope at the time point 620 suggests that raw materials other than raw material C (for example, the intermediate AB) were depleted, causing the chemical reaction to stop.

**In** S400, immediately after the time point 620, the estimation unit 240 may detect the variation of the slope of such a first principal component. The rapid variation in the slope of the first principal component in Fig. 6 appears in the numeric values of the nth-order derivative value of the first principal component (for example, the first derivative value). For example, when using the first principal component as the feature quantity, the estimation unit 240 calculates the nth-order derivative value (for example, the first derivative value) of the first principal component, and determines that the slope of the first principal component has rapidly varied (that is, the chemical reaction has ended) when the nth-order derivative value (or its absolute value) has become equal to or greater than the threshold.

When the quantity of the raw material C added by the time point 620 is 1.7 mmol as shown in the figure, the identification unit 250 identifies the quantity of the intermediate AB reacted with raw material C as 1.7 mmol, the same as the raw material C. Also, the identification unit 250 identifies the quantity of the intermediate ABC that is the product as 1.7 mmol.

On the other hand, the raw material C is continuously added immediately after the start of the reaction, as shown in the figure, and the total quantity of the added quantity continues to increase. At the time point 610, the addition of the raw material C is stopped. Since the chemical reaction becomes impossible to continue at the time point 620, the addition of the raw material C from the time point 620 to the time point 610 constitutes an unnecessary addition of the raw material C that does not contribute to the reaction.

In the present embodiment, the estimation unit 240 can determine in real time whether or not the chemical reaction has ended. Accordingly, in the present embodiment, the unnecessary supply of raw materials can be stopped promptly after the time point 620.

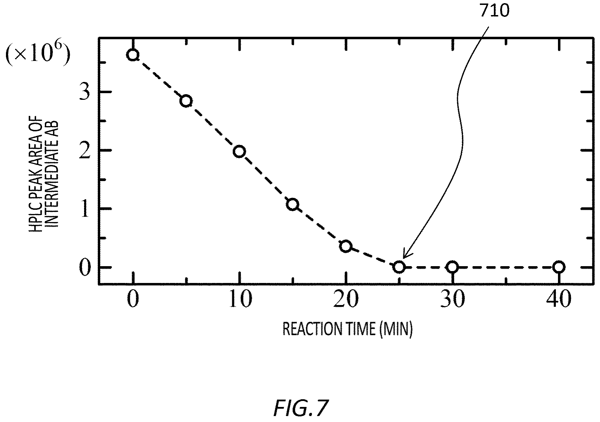

Fig. 7 illustrates another example of a feature quantity graph according to the present embodiment. The horizontal axis in Fig. 7 shows the elapsed time after the start of the chemical reaction producing the intermediate ABC (second stage in Fig. 1), displayed as "reaction time (min)". The vertical axis in Fig. 7 shows a peak area of the intermediate AB detected by analyzing the chemical reaction system in a High-Performance Liquid Chromatography (HPLC).

As shown in the figure, the numeric value of the peak area decreases immediately after the reaction and subsequently continues to decrease until the time point 710 with an approximately constant slope. The numeric value of the peak area decreasing at a constant rate indicates that a particular component included in the chemical reaction system also decreases in a constant rate. This suggests that prior to the time point 710, the consumption of raw materials not supplied (for example, the intermediate AB) proceeds at an approximately constant rate.

At the time point 710 (the plot around 25 minutes in the figure), the decrease in peak area numeric values stops. This indicates that raw materials other than raw material C (for example, the intermediate AB) have been depleted, causing the reaction to stop. When the calculation unit 230 uses the peak area in the wavelength region corresponding to intermediate AB in the spectroscopic spectrum as a feature quantity, the temporal variation in this feature quantity is expected to show a trend similar to the graph in Fig. 7.

In S400, the estimation unit 240 may detect the variation of the peak area of the spectroscopic spectra. The flattening of the slope of the peak area in the spectroscopic spectra manifests in the numeric value of the peak area itself and/or the numeric value of the nth-order derivative value of the peak area (for example, the first derivative value).

For example, when using the peak area as a feature quantity, the estimation unit 240 determines that the chemical reaction has ended when the numeric value of the peak area falls to a threshold or less set near zero. Alternatively, the estimation unit 240 may determine that the chemical reaction has ended when the nth-order (for example, first) derivative value (or its absolute value) of the peak area becomes equal to or greater than the threshold.

The calculation unit 230 may use, as a feature quantity, a peak intensity of a specific wavelength range in addition to/ instead of a peak area of the specific wavelength range. The calculation unit 230 may use a peak area and/or a peak intensity corresponding to a single peak, and alternatively, may use a peak area and/or a peak intensity corresponding to a plurality of peaks.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, or the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as SMALLTALK (registered trademark), JAVA (registered trademark), C++, or the like, and a conventional procedural programming language such as a "C" programming language or a similar programming language.

The computer-readable instructions may be provided for a processor or programmable circuit of a general-purpose computer, special-purpose computer, or other programmable data processing apparatuses such as a computer locally or via a wide area network (WAN) such as a local area network (LAN), the Internet, or the like, and execute the computer-readable instructions in order to create means for executing the operations designated in flowcharts or block diagrams. Examples of the processor include a computer processor, a processing unit, a microprocessor, a digital signal processor, a controller, a microcontroller, and the like.

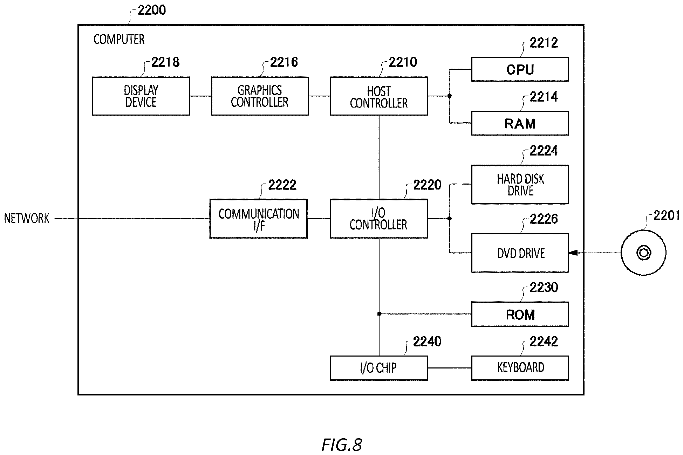

Fig. 8 illustrates an example of a computer 2200 in which a plurality of aspects of the present invention may be embodied wholly or in part. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment, includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer-readable medium such as the DVD-ROM 2201 or the IC card. The programs are read from the computer-readable medium, are installed in the hard disk drive 2224, the RAM 2214, or the ROM 2230, which is also an example of the computer-readable medium, and are executed by the CPU 2212. The information processing described in these programs is read by the computer 2200, and provides cooperation between the programs and the various types of hardware resources. The apparatus or method may be configured by implementing operations or processing of information according to the use of the computer 2200.

For example, in a case where communication is performed between the computer 2200 and an external device, the CPU 2212 may execute a communication program loaded in the RAM 2214 and instruct the communication interface 2222 to perform communication processing based on processing described in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

The CPU 2212 may allow files or databases stored in their entirety or necessary portions on external storage media such as the hard disk drive 2224, DVD-ROM drive 2226 (DVD-ROM 2201), or IC cards to be read into the RAM 2214, and may perform various types of processing on the data in the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

While the embodiments of the present invention have been described, the technical scope of the present invention is not limited to the above-described embodiments. It is apparent to persons skilled in the art that various alterations or improvements can be added to the above-described embodiments. It is also apparent from the claims that the embodiments added with such alterations or improvements can be included in the technical scope of the present invention.

The operations, procedures, steps, and stages or the like of each process performed by an apparatus, system, program, and method shown in the claims, specification, or drawings can be performed in any order as long as the order is not indicated by "prior to," "before," or the like and as long as the output from a previous process is not used in a later process. Even if the process flow is described using phrases such as "first" or "next" in the claims, specification, and drawings, it does not necessarily mean that the process must be performed in this order. The notation "A and/or B" may indicate "A, B, or A and B."
The notation "A, B and/or C" may indicate "either one of A, B, or C, or any combination of two or more of these. "

### EXPLANATION OF REFERENCES

10: raw material A; 12: raw material B; 14: intermediate AB; 16: raw material C; 18: intermediate ABC; 20: raw material D; 30: product; 50: analytical apparatus; 100: reaction unit; 110: reaction tank; 120: raw material supplying unit; 130: stirrer; 140: spectral sensor; 200: computation unit; 210: reaction control unit; 220: spectrum acquisition unit; 225: preprocessing unit; 230: calculation unit; 240: estimation unit; 250: identification unit; 610: time point; 620: time point; 710: time point; 2200: computer; 2201: DVD-ROM; 2210: host controller; 2212: CPU; 2214: RAM; 2216: graphics controller; 2218: display device; 2220: input/output controller; 2222 communication interface; 2224: hard disk drive; 2226: DVD-ROM drive; 2230: ROM; 2240: input/output chip; 2242: keyboard.

## Claims

1. An analytical apparatus that estimates an end point of a chemical reaction, where a concentration of at least one raw material is unknown, comprising:
a spectrum acquisition unit that acquires spectroscopic spectra at a plurality of time points for a chemical reaction system;
a calculation unit that calculates a spectroscopic spectrum feature quantity for each time point from the spectroscopic spectra at the plurality of time points; and
an estimation unit that estimates an end point of a chemical reaction based on variation of the feature quantity that is calculated by the calculation unit.

2. The analytical apparatus according to claim 1, further comprising an identification unit that identifies, based on an end point of a chemical reaction estimated by the estimation unit, a quantity of a concentration-unknown raw material that is a raw material of unknown concentration used in the chemical reaction system.

3. The analytical apparatus according to claim 2, wherein
the concentration-unknown raw material is a product of a chemical reaction in a previous stage of the chemical reaction to be estimated.

4. The analytical apparatus according to any one of claims 1 to 3, wherein the calculation unit calculates a principal component of spectroscopic spectra at each time point included in the plurality of time points as the feature quantity by performing principal component analysis on spectroscopic spectra at the plurality of time points.

5. The analytical apparatus according to any one of claims 1 to 3, wherein the calculation unit calculates a value, as the feature quantity, based on peak area and/or peak intensity of an identified wavelength included in spectroscopic spectra at each time point included in the plurality of time points.

6. The analytical apparatus according to any one of claims 1 to 5, wherein the estimation unit estimates the end point of the chemical reaction based on a first derivative value of the feature quantity with respect to time lapse.

7. The analytical apparatus according to any one of claims 1 to 5, wherein the estimation unit estimates, as an end point of a chemical reaction, a time point when an absolute value of a first derivative value of the feature quantity with respect to time lapse has become equal to or greater than a threshold.

8. The analytical apparatus according to any one of claims 1 to 7, further comprising
a preprocessing unit that preprocesses the spectroscopic spectra,
wherein the calculation unit calculates the feature quantity from spectroscopic spectra preprocessed by the preprocessing unit.

9. The analytical apparatus according to claim 8, wherein the preprocessing unit applies, as the preprocess, any one or more of baseline correction, first derivation and second derivation in relation to the spectroscopic spectra.

10. The analytical apparatus according to any one of claims 1 to 9, wherein
the chemical reaction is a part of a continuous reaction that uses a product as a new raw material to repeatedly cause a subsequent reaction.

11. The analytical apparatus according to any one of claims 1 to 10, wherein
the chemical reaction is a reaction that produces a block copolymer by polymerizing a second monomer onto a polymer composed of repeating units of a first monomer, the second monomer being different from the first monomer.

12. An analytical method for estimating an end point of a chemical reaction, in which a concentration of at least one raw material is unknown, comprising:
acquiring spectroscopic spectra at a plurality of time points for a chemical reaction system;
calculating a spectroscopic spectrum feature quantity for each time point from the spectroscopic spectra at the plurality of time points; and
estimating an end point of a chemical reaction based on variation of the feature quantity that is calculated during the calculating.

13. The analytical method according to claim 12, further comprising
identifying, based on the end point of the chemical reaction that is estimated at the estimating, a quantity of a concentration-unknown raw material, which is a raw material of unknown concentration, used in the chemical reaction system.

14. A program for estimating an end point of a chemical reaction where a concentration of at least one raw material is unknown, comprising instructions,
when carried out by a computer, the instructions causing the computer to perform:
acquiring spectroscopic spectra at a plurality of time points of a chemical reaction system;
calculating a spectroscopic spectrum feature quantity for each time point from spectroscopic spectra at the plurality of time points; and
estimating an end point of a chemical reaction based on variation of the feature quantity calculated during the calculating.

15. The program according to claim 14, further comprising instructions that causes the computer to perform
Identifying a quantity of a concentration-unknown raw material that is a raw material of unknown concentration used in the chemical reaction system, based on an end point of a chemical reaction estimated in the estimating.
